# FASCICULE DE BREVET EUROPEEN

(11) **EP 4 302 061 B1**
(45) Date de publication et mention de la délivrance du brevet: **19.02.2025**
(21) Numéro de dépôt: 22710056.7
(22) Date de dépôt: 03.03.2022
(51) Int. Cl.: G01M 3/16

(54) **SYSTÈME ET PROCÉDÉ AUTOMATIQUES OU AU MOINS SEMI-AUTOMATIQUES DE DÉTECTION ET DE SIGNALISATION D'UNE FUITE AU NIVEAU D'UNE TOITURE**
AUTOMATISCHES ODER ZUMINDEST HALBAUTOMATISCHES SYSTEM UND VERFAHREN ZUR ERKENNUNG UND MARKIERUNG EINES LECKS IN DACHABDECKUNGEN
AUTOMATIC OR AT LEAST SEMI-AUTOMATIC SYSTEM AND METHOD FOR DETECTING AND FLAGGING A LEAK IN ROOFING

(30) Priorité: 04.03.2021 FR 2102106
(43) Date de publication de la demande: 10.01.2024
(73) Titulaire: SOPREMA, 67100 Strasbourg (FR)
(72) Inventeur: BINDSCHEDLER, Pierre-Etienne, 67000 STRASBOURG (FR); PERRIN, Rémi, 67530 BOERSCH (FR); OZCELIK, Kent Albert, 67000 STRASBOURG (FR)
(74) Mandataire: Cabinet Nuss
(86) Numéro de dépôt international: PCT/EP2022/055338
(87) Numéro de publication internationale: WO 2022/184804

(56) Documents cités:
- EP-A1- 2 458 106
- WO-A1-2019/234703
- WO-A1-98/25119
- CA-A1- 2 596 212
- US-A1- 2018 202 163
- US-A1- 2020 256 755
- US-B1- 10 634 579

## Description

[La présente invention concerne un procédé automatiques ou au moins semi-automatiques de détection et de signalisation d'une fuite au niveau d'une toiture, permettant avantageusement d'avertir simultanément plusieurs acteurs concernés, à savoir, par exemple le(s) propriétaire(s)/résident(s)/gestionnaire(s) de l'immeuble, du bâtiment ou de l'habitation, un professionnel de l'étanchéité et l'administrateur du système.

Il existe actuellement une demande non satisfaite pour un système et un procédé automatiques, ou au moins semi-automatiques, de détection et de signalisation d'une fuite au niveau d'une toiture, qui permettrait 1) de discriminer les fausses alertes, 2) par zonage de localiser ladite fuite, par prise en compte de différents facteurs/paramètres d'en estimer la gravité et l'urgence d'une éventuelle intervention, 3) d'avertir simultanément plusieurs acteurs concernés, et 4) de disposer d'une structure de système modulaire et flexible permettant de s'adapter à l'évolution du parc immobilier surveillé.

Par rapport à la détection ponctuelle réalisée par les systèmes actuels, la solution proposée devrait permettre de réaliser une surveillance et une détection surfaciques.

En outre, le procédé proposé ne devrait nécessiter que la mise en oeuvre d'un nombre limité de composants sur sites, aisés à installer et à intégrer dans la toiture, lors de sa réalisation ou de sa réfection. En particulier, le fait de pouvoir s'affranchir d'opérations de câblage et d'assemblage complexes, ou encore de branchement au secteur électrique, est recherché. La solution proposée pourrait ainsi être installée sans avoir recours à un électricien (réduction des coûts- installation par le seul étancheur).

WO2019/234703 divulgue un procédé selon le préambule de la revendication 1.

En accord avec l'invention, au moins les buts principaux exposés ci-dessus sont atteints grâce à procédé selon la revendication 1.

La description qui suit se rapporte à des modes de réalisation préférés de réalisation de l'invention, donnés à titre d'exemples non limitatifs, et expliqués avec référence aux dessins schématiques annexés, dans lesquels :
[Fig. 1] illustre schématiquement la construction et le principe de fonctionnement (détection de fuite) d'une unité locale (Ui) de détection et de communication non revendiquée, affectée à une zone (Zi) de toiture ou de partie de toiture (2) à surveiller ;
[Fig. 2A] et
[Fig. 2B] illustrent schématiquement en vues de dessus deux variantes d'installation d'unités locales au niveau de zones de toiture à surveiller ;
[Fig. 3A],

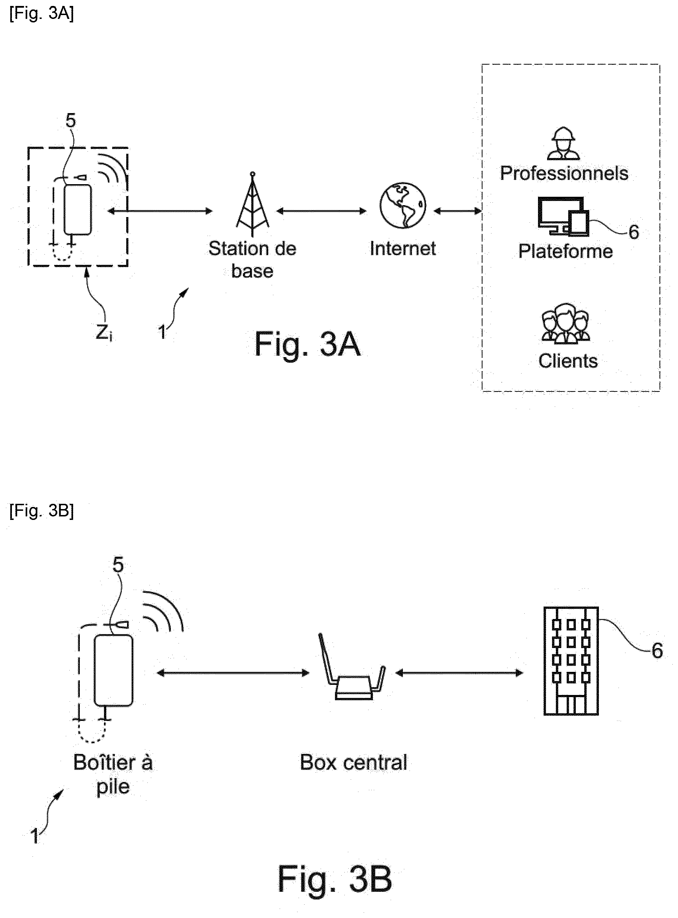

[Fig. 3B] et

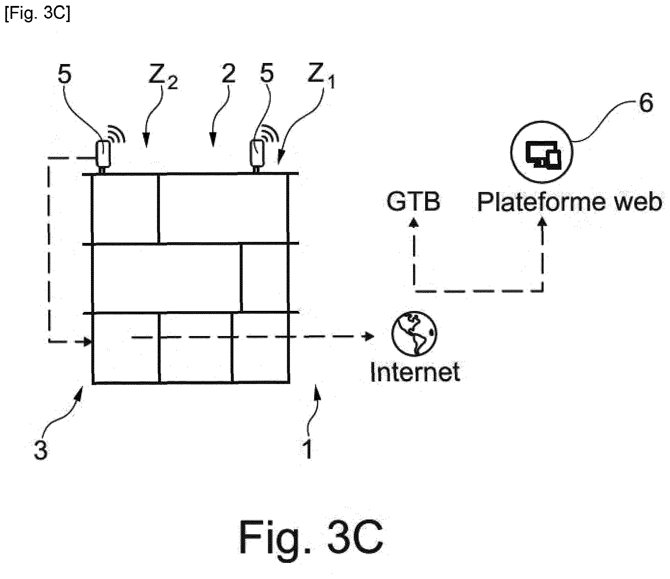

[Fig. 3C] sont des représentations symboliques de trois variantes de réalisation d'un système non revendiqué, qui se différencient entre elles principalement par les modes de communication entre les unités locales et la plateforme ;

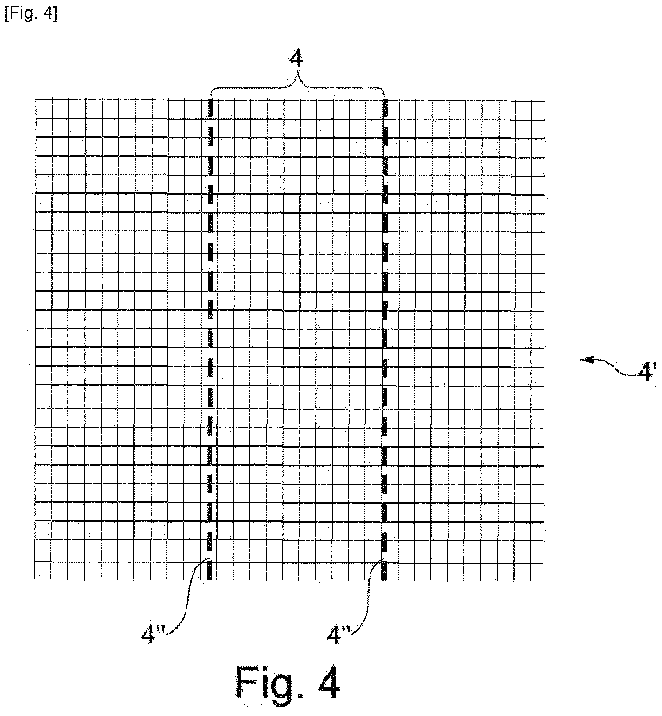

[Fig. 4] est une vue de détail d'une variante de réalisation pratique possible d'un capteur de contact (4) sous forme de ruban (4') intégrant deux lignes conductrices (4") - ruban avec lignes incorporé dans une toile en PES, trames identiques - et faisant partie d'une unité locale (Ui) non couverte par l'invention ;

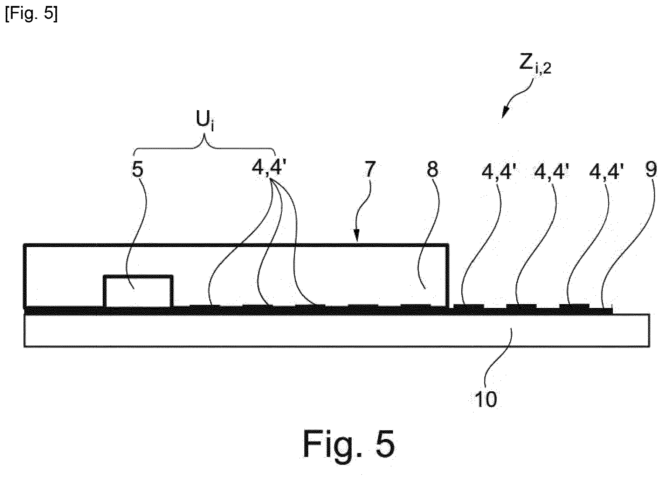

[Fig. 5] illustre schématiquement, en vue de coupe et à titre d'exemple, l'installation d'une telle unité dans une toiture ;

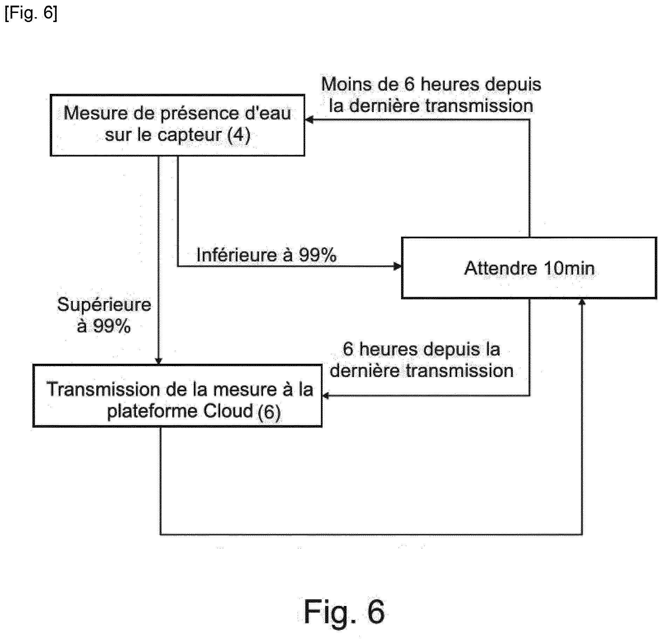

[Fig. 6] représente l'ordinogramme de la routine de pilotage du fonctionnement du module de communication (5) d'une unité locale (Ui) non couverte par l'invention

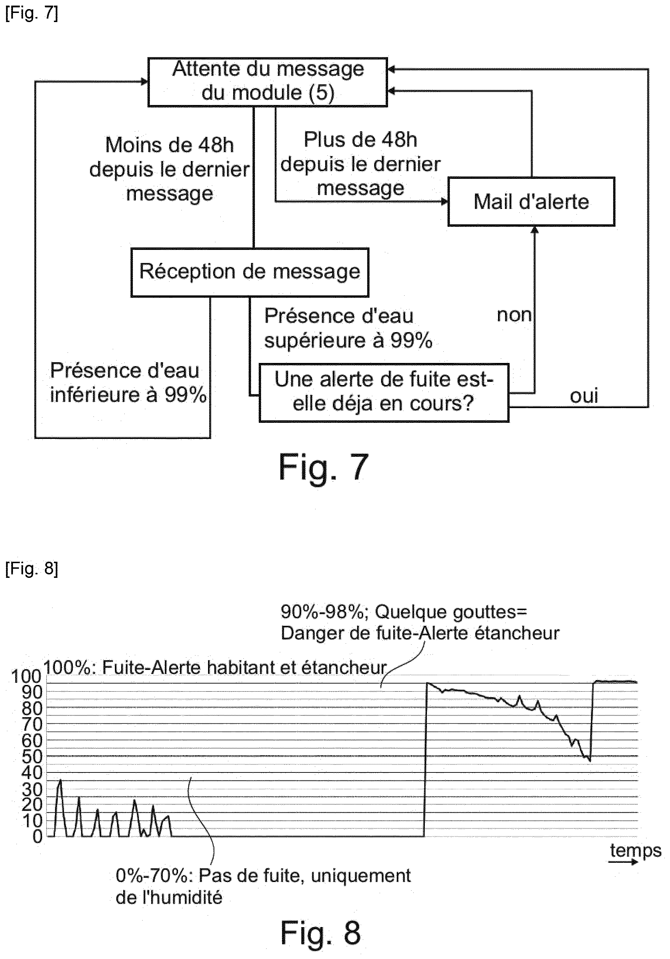

[Fig. 7] représente l'ordinogramme de la routine de communication de la plateforme (6) avec chaque module (5) des différentes unités locales (Ui) faisant partie du système non revendiqué ;
[Fig. 8] représente une possible interprétation, automatique par un logiciel adapté ou visuelle par un opérateur, de la courbe des valeurs de mesure transmises successivement dans le temps par une unité locale (Ui) à la plateforme (6) ;
[Fig. 9A],

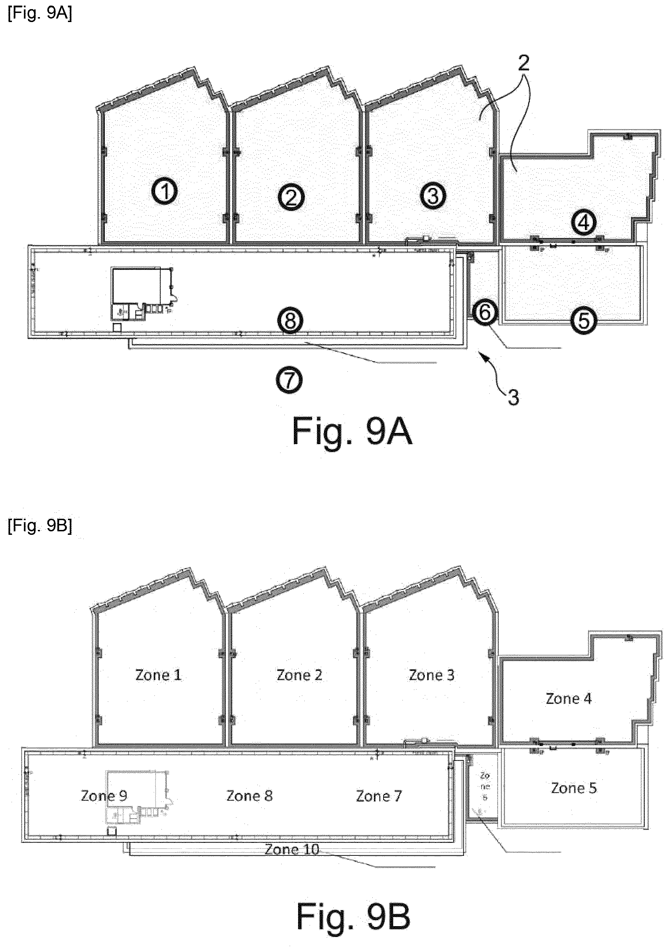

[Fig. 9B] et

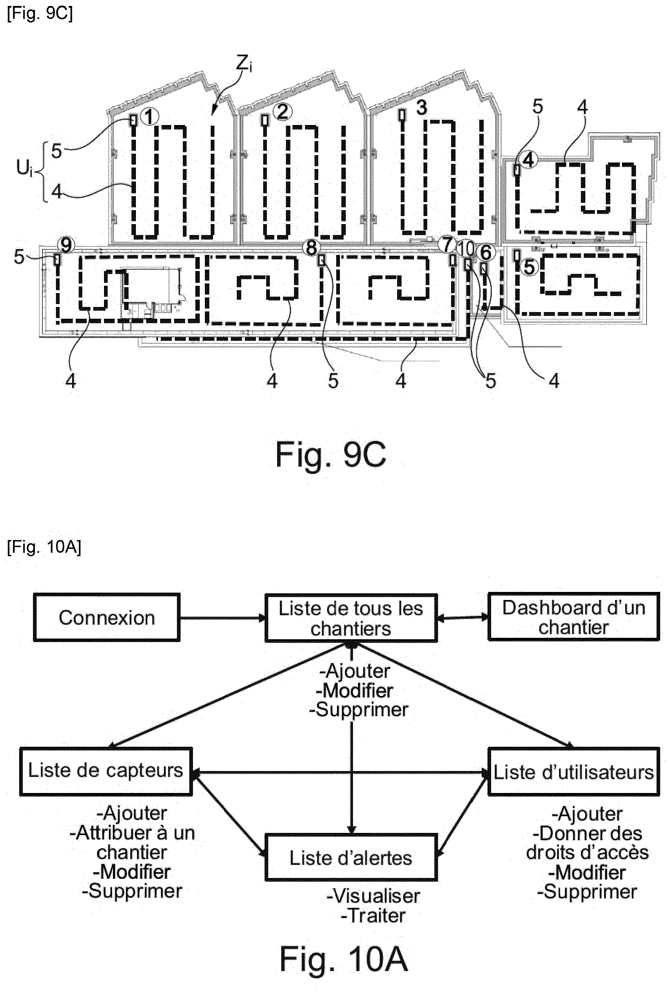

[Fig. 9C] sont des vues de dessus de toitures de plusieurs immeubles adjacents ou des parties de toiture d'un unique immeuble illustrant la délimitation de zones (Zi) et l'installation des unités locales (Ui) ;
[Fig. 10A],

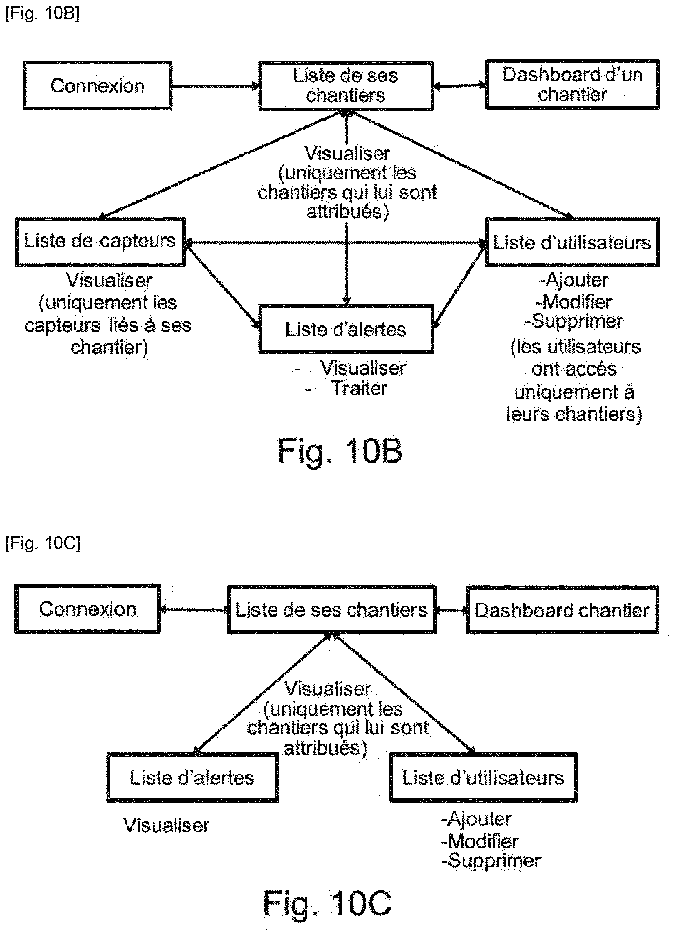

[Fig. 10B] et
[Fig. 10C] illustrent de manière symbolique les informations accessibles et les actions autorisées au niveau de la plateforme (6) pour les différents utilisateurs possibles de cette dernière, à savoir, l'administrateur de la plateforme (figure 10A), le professionnel étancheur (figure 10B) et le résident/propriétaire (figure 10C) ;

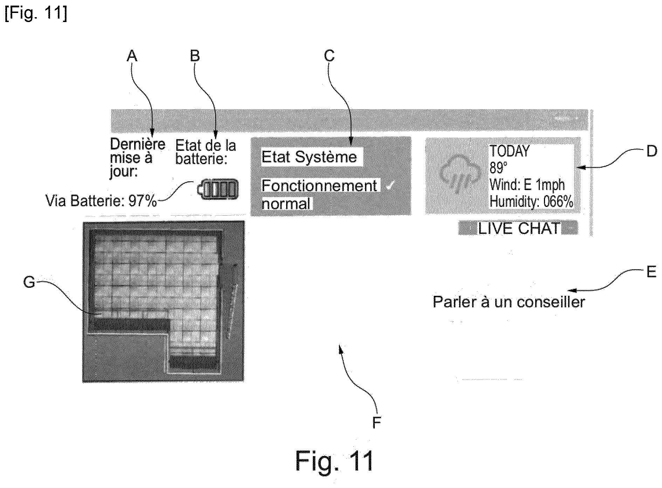

[Fig. 11] est un exemple d'une copie d'écran d'un utilisateur ayant accédé à la plateforme (6) pour vérifier la situation au niveau d'une zone (Zi) surveillée, montrant les différentes informations disponibles (ici la situation est normale-pas de fuite).

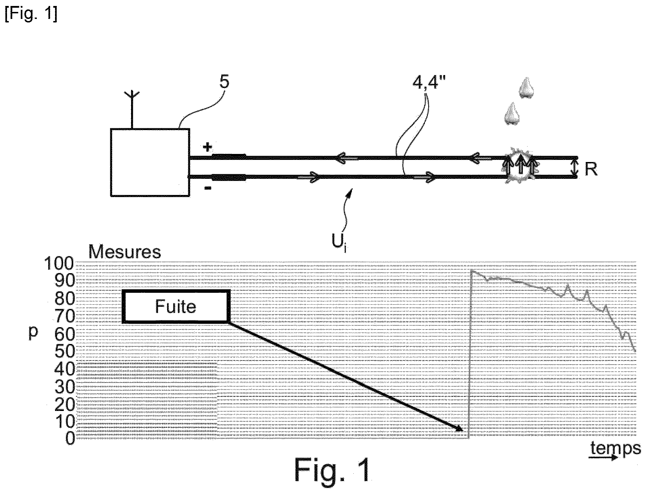

Les figures 1 à 5 illustrent conjointement et de manière schématique, le cas échéant pour certains seulement partiellement, un système semi-automatique ou automatique (1) de détection et de signalisation d'une fuite au niveau d'une toiture (2) ou d'au moins une partie de toiture d'au moins un(e) immeuble, bâtiment ou habitation (3). Bien entendu, le système surveille préférentiellement et de manière centralisée un grand nombre sites du type précité.

Conformément à l'invention, ce système de détection et de signalisation d'une fuite comprend notamment :
- une unité locale (Ui) de détection et de communication pour chaque zone (Zi) de toiture ou de partie de toiture (2) à surveiller, cette unité comprenant un capteur (4) allongé, par exemple sous la forme d'un capteur à contact consistant en un ruban (4') intégrant deux lignes conductrices (4"), et un module (5) de mesure de la résistance (R) entre ces lignes (4") et de transmission d'au moins certains résultats des mesures successivement réalisées, le cas échéant après prétraitement, et,
- une plateforme de gestion (6) configurée pour recevoir et traiter les mesures des modules (5) des différentes unités (Ui) locales gérées par elle, et pour, le cas échéant, déclencher sélectivement une ou des actions prédéterminées en fonction de l'évaluation des mesures réceptionnées et de l'estimation de la présence ou non d'une fuite.

Chaque capteur (4) est installé sous la couche d'étanchéité (7) de la zone de toiture (Zi) associée et la configuration de pose de chaque capteur allongé (4) est adapté à la forme de la zone (Zi) surveillée par l'unité locale (Ui) considérée et cette dernière effectue des mesures répétitives à intervalle régulier. De plus, la communication montante entre chaque unité locale (Ui) et la plateforme (6) s'effectue par messages à provenance identifiée (par exemple chaque module possède un identifiant unique), transmis inconditionnellement à intervalle maximal (durée maximale prédéterminée entre deux messages successifs), et est réalisée au moins localement par un mode de transmission sans fil entre, d'une part, le module (5) de l'unité locale (Ui) considérée et, d'autre part, soit une borne relais locale, soit une station de base ou encore un système de communication analogue relié à internet et présent dans l'immeuble, le bâtiment ou l'habitation (3) visée, voire une structure voisine.

L'invention fournit ainsi un système répondant à la plupart des demandes exprimées précédemment, et propose une solution facile à installer dans les constructions neuves, mais également durant les phases de rénovation des toitures, et ce sans faire appel à un corps de métier autre que les professionnels de l'étanchéité. De plus, du fait de sa nature allongée, continue et d'un seul tenant, le capteur (4) est aisé à manipuler et à poser sur site. En outre, par un schéma de pose ou calepinage adapté, aisément déterminable par l'homme du métier ayant pris connaissance de l'invention, la couverture surfacique en termes de surveillance des fuites de la zone surveillée affectée à un capteur concerné peut être optimisée de telle manière que chaque point de cette zone se trouve en dessous d'une distance maximale par rapport audit capteur. On comprend également que les données transmises par un module (5) à la plateforme (6), à l'exception des informations de statut qui sont transmises régulièrement, peuvent consister en des données de mesure quasi-brutes, en des données de résultats d'analyse des données de mesure ou en une information d'alerte finalisée, ce en fonction des capacités de traitement et d'évaluation intégrées dans ledit module (5).

Conformément à une réalisation préférée de l'invention, chaque module (5) est autonome, notamment en termes d'alimentation en énergie et de fonctionnement, et intègre des moyens logiciels d'évaluation des mesures de résistance (R) et d'estimation du taux de présence d'eau (P), ces moyens déclenchant l'envoi immédiat d'un message d'alerte lorsque ledit taux dépasse une valeur seuil prédéterminée. Ce message d'alerte peut éventuellement aussi comprendre au moins une partie des données de mesure ayant abouties au déclenchement de l'alerte par le module, ce en vue d'une possible vérification au niveau de la plateforme.

Selon une caractéristique de l'invention, la plateforme (6), contrôlée par l'administrateur du système (1), intègre des moyens logiciels pour la détermination de la probabilité de la présence d'une fuite suite à la réception d'un message d'alerte de la part d'un module et, le cas échéant, également prise en compte d'autres facteurs ou informations, et pour l'envoi conditionnel d'une notification à l'étancheur et/ou au(x) résident(s) et/ou au(x) propriétaire(s) et/ou au gestionnaire immobilier concerné (s), le cas échéant de notifications différentiées selon les destinataires, ladite plateforme (6) étant accessible pour les destinataires autorisés (dûment identifiés), préférentiellement avec des informations/données consultables différentes en fonction de la qualité du destinataire considéré.

Selon une autre caractéristique de l'invention, la plateforme (6) intègre aussi des moyens logiciels pour l'analyse et l'évaluation de la forme d'une courbe enregistrée de variation du taux de présence d'eau (P) sur une période précédant la réception d'un message d'alerte indiquant le dépassement d'une valeur seuil pour ce taux, et/ou pour l'attribution d'un degré d'urgence aux actions à entreprendre suite à une détection de fuite, ce en fonction notamment de prévisions météorologiques locales.

En outre, il peut être prévu que la plateforme (6) soit reliée à des sources d'informations relatives notamment aux précipitations passées et en cours au niveau des différentes zones (Zi) surveillées par cette plateforme (6), ainsi qu'aux températures aux mêmes endroits.

La collation et l'exploitation de ces données au niveau de la plateforme permettent de discriminer les « fausses » alertes, de ne diffuser que des alertes relatives à de « vraies » fuites et de déterminer le degré d'urgence de l'intervention à effectuer le cas échéant.

Avantageusement, chaque message envoyé par un module (5) comprend au moins : un identifiant unique correspondant à l'unité (Ui) concernée, une donnée indiquant le taux de présence d'eau (P) déterminé à partir de la mesure de la résistance (R), et exprimé par exemple en % de présence, et la date et l'heure de la mesure. Ce type de message peut être envoyé régulièrement ou, préférentiellement, seulement lorsqu'une valeur de taux supérieure à un seuil prédéterminé est relevée (en plus des messages de routine/indication de statut). La portée d'émission du module (5) pourra par exemple être compris entre quelques centaines de mètres à plusieurs kilomètres, voire plusieurs dizaines de kilomètres, en fonction du réseau local et du mode de communication avec la plateforme (6).

Comme le montre la figure 5 à titre d'exemple, et lorsque la toiture (2) concernée comprend, reposant sur un support (10), de l'intérieur vers l'extérieur, au moins une couche d'isolant (8) et une couche d'étanchéité (7), le capteur (4) est avantageusement disposé sous la couche d'isolant (8), en reposant sur le support (10) ou sur une éventuelle couche pare-vapeur (9) posée sur ce dernier, le module (5) étant logé dans l'épaisseur de ladite couche d'isolant (8) ou dans un boîtier de protection, spécifique ou non, tel que par exemple un lanterneau.

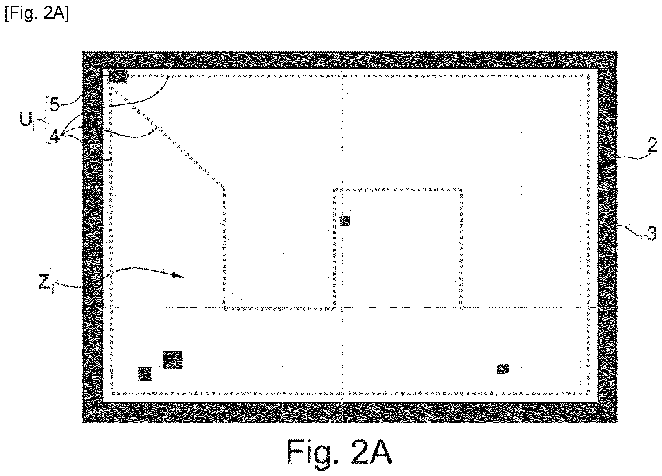

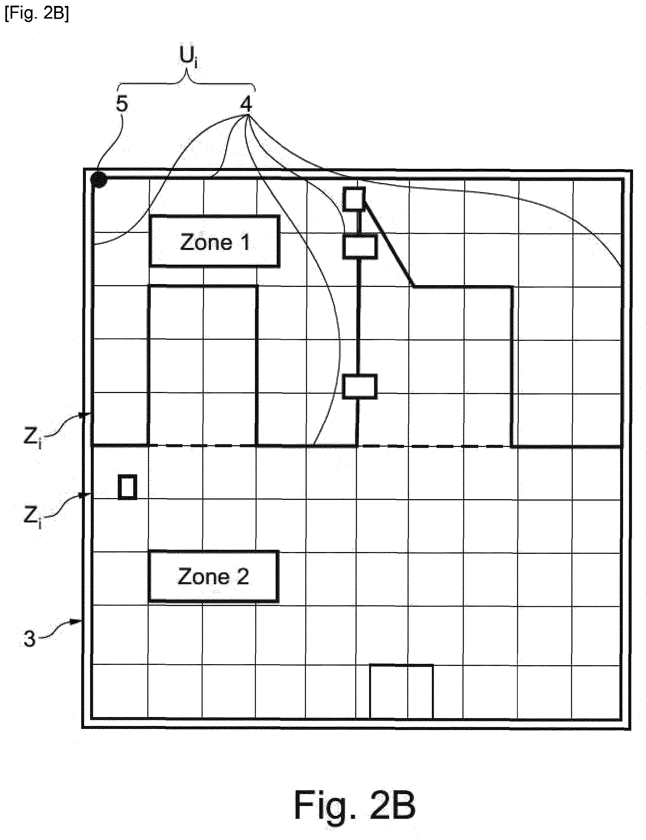

Comme le montre par exemple les figures 2A, 2B et 9C, le ou chaque capteur (4) comprend préférentiellement une première portion (11) installée de manière à s'étendre sensiblement sur tout le pourtour de la zone (Zi) à laquelle il est associé et au moins une seconde portion (11') s'étendant à l'intérieur de cette zone (Zi), préférentiellement selon une configuration permettant une couverture sensiblement homogène de la surface de ladite zone (Zi) en termes de distance moyenne par rapport audit capteur (4).

Bien entendu, d'autre schémas de pose du capteur allongé peuvent être envisagés, tel que par exemple en serpentin, avec la recherche d'une longueur minimale et simultanément d'une couverture surfacique homogène et efficiente, avec notamment une distance entre le capteur (4) et chaque point de la zone associée (Zi) inférieure à une valeur seuil déterminée, choisie en fonction de la précision/vitesse de détection souhaitée. A titre d'exemple pratique, le capteur peut être arrangé de telle manière que chaque mètre de capteur couvre/surveille 1m² de zone de toiture, avec un maximum de par exemple 50m² surveillés par capteur.

En relation avec l'invention, le fonctionnement de chaque unité locale (Ui) de détection et de communication et la communication entre la plateforme (6) et les modules (5) de ces unités (Ui) sont pilotés par des routines de pilotage adaptées, comme par exemple celles illustrées respectivement sur les figures 6 et 7.

L'invention a également pour objet un procédé semi-automatique ou automatique de détection et de signalisation d'une fuite au niveau d'une toiture (2) ou d'au moins une partie de toiture d'au moins un(e) immeuble, bâtiment ou habitation (3), ledit procédé utilisant le système de détection et de signalisation d'une fuite décrit ci-dessus, et mettant avantageusement en oeuvre les routines de pilotage des figures 6 et 7.

Grâce aux moyens logiciels présents au niveau du module (5) et surtout de la plateforme (6), l'ensembles des opérations de mesure, d'évaluation, de vérification/validation éventuelle, de signalement/diffusion d'alerte et éventuellement de suivi des actions ultérieures sont réalisées de manière essentiellement, voire totalement, automatique grâce à des routines et des logiciels de pilotage adaptés, par exemple du type ressortant des figures annexées et de la description qui suit.

Il peut être prévu qu'une mesure soit réalisée à intervalle régulier (toutes les 10, 20 ou 30 minutes, toutes les heures ou toutes les 6 heures par exemple), qu'un message d'alerte soit envoyé immédiatement à la plateforme (6) si la mesure de présence d'eau est supérieure à 90% ou 95% par exemple, ou sinon que toutes les heures ou toutes les 4 ou 6 heures par exemple la ou les dernières valeurs mesurées soient transmises. Ainsi, une communication montante est réalisée de chaque module vers la plateforme dans un intervalle maximal prédéterminé, par exemple résultant d'un compromis entre une autonomie maximale du module (éventuellement alimenté par un dispositif de génération d'énergie durable - phtovoltaïque, éolien, ...) et une surveillance continue resserrée.

En relation avec l'invention, il est par exemple possible de définir 4 états d'alerte pour une zone (Zi) donnée en fonction des mesures du capteur (4) associé, donnant lieu à des actions automatiques de la part de la plateforme, à savoir :
- état » Risque de fuite » : par exemple P supérieur à 90% ; actions : message à l'étancheur et à l'administrateur, habitant/ propriétaire pas averti.
- état « Fuite » : par exemple P proche ou égal à 100% ; actions : message à l'étancheur, à l'administrateur et à l'habitant.
- état « intervention » : activé par l'étancheur, permet d'indiquer que l'étancheur a pris connaissance de la fuite et qu'une intervention est en cours ou prévue ; actions : message à l'habitant et désactivation de cet état après une durée déterminée avec retour à l'état courant correspondant à la dernière mesure effectuée par le capteur concerné.
- état « normal » : lorsque P est inférieur à environ 70% ; action : aucune.

Les caractéristiques décrites ci-après constituent des exemples non limitatifs de possibles réalisations pratiques de certains aspects ou de certaines parties de l'invention, tant pour le système que pour le procédé.

En accord avec un possible mode de réalisation du procédé selon l'invention, le traitement et l'évaluation des informations provenant des différentes unités locales (capteurs 4 + modules 5 associés) peuvent comprendre pour une unité (Ui) donnée :
1- La centralisation de la résistance R mesurée sur le capteur vers un serveur cloud (en relation avec la plateforme de gestion 6- valeur de R entre 0 et 65535 ohms)
2- La transformation de la résistance R mesurée entre les deux fils en un % de présence d'eau P, telle que : P = (65535-R) /R*100
3- (1^{ère} variante) : alerter si P est supérieur à un seuil défini
4- (2^{nde} variante) : Analyser les précipitations locales (acquises via internet) ayant précédé un possible dépassement du seuil, ainsi que la température ambiante et la forme de la courbe de P, pour déterminer s'il s'agit en réalité d'une une condensation dans l'étanchéité ou effectivement d'une vraie fuite (cette opération peut être automatique ou manuelle).

A titre d'exemple, les moyens de communication/d'interfaçage entre les différentes parties du système (1) peuvent se présenter comme suit :
- Entre capteur (4) et module de communication (5) : branchement filaire (voir figure 1)
- Entre module (5) et plateforme (6) (par exemple : serveur cloud administrateur) : communication sans fil LPWAN via un opérateur public, connexion via une station de base ou connexion via une Box centrale.

Les capteurs (4) sont préférentiellement du type capteur à contact, avantageusement des capteurs de résistance.

Plus précisément, chaque capteur (4) peut comprendre deux fils conducteurs (4") en acier inoxydable (316L) encapsulé dans un tressage en polyéthylène (bande de base + logement tubulaire). Le capteur peut être intégré ou associé, comme le montre la figure 4, a une toile ou nappe couvrant toute la surface de la zone à surveiller.

L'implantation sur site, pour les différentes zones à surveiller, des unités (Ui), peut par exemple se dérouler comme suit (pour chaque unité) :
1- Pose du module (5) sur le pare-vapeur (9),
2- Déroulage du capteur (4) sur le pare-vapeur selon plan de calepinage prédéterminé ou non, avec placement de portions de bande adhésive à intervalle régulier pour leur maintien en position sur le pare-vapeur,
3- 3a- Découpe d'une encoche dans l'isolant (8) de la taille du module afin qu'il puisse être placé par-dessus (figure 5-module logé dans l'isolant), ou
4- 3b- Mise en oeuvre d'un mini lanterneau (env. 25x25cm) posé sur le pare-vapeur, dans lequel est placé le module.

Les informations exploitables sur la plateforme de gestion peuvent par exemple comprendre :
1) Informations internes sur l'unité (Ui)/le module (5) :
   - Identifiant unique
   - Mesure de la présence d'eau (entre 0% et 100%)
   - Date de la mesure
2) Informations externes (par exemple web) :
   - Précipitations locales
   - Température locale
   - Prévisions de pluie pour la semaine
3) Informations saisies manuellement :
   - Coordonnées du client et de l'étancheur
   - Adresse du chantier
   - Noms/numéros des zones

Les fonctionnalités/prestations suivantes peuvent par exemple être proposées par rapport aux différents acteurs :
A) Pour le client final (résident-propriétaire-gestionnaire) :
   1-Doit être alerté en cas de fuite d'eau par mail
   2-Doit pouvoir se connecter à la plateforme de gestion et voir par ordre d'importance :
      - Quand a eu lieu la fuite
      - Où a eu lieu la fuite : nom de la zone et plan du chantier (lorsqu'il y en a)
      - Est-ce qu'il y a eu de la pluie juste avant/après, qui confirmerait d'avantage la présence d'une fuite ?
      - Est-ce qu'il risque de pleuvoir dans les heures/jours à venir ?
B) Pour le professionnel de l'étanchéité (étancheur)
   1-Doit être alerté en cas de fuite d'eau par mail
   2-Doit pouvoir se connecter à la plateforme et voir rapidement :
      - Où est la fuite (quel chantier, quel client et quelle zone)
      - Quand la fuite a eu lieu
      - Est-ce qu'il y a eu de la pluie juste avant/après, qui confirmerait davantage la fuite ?
      - Est-ce qu'il risque de pleuvoir dans les heures/jours à venir ? 3-Doit pouvoir signaler au client qu'il est bien informé de la fuite
C) Pour l'administrateur du système :
   1-Doit être alerté en cas de fuite d'eau par mail/SMS ou analogue
   2-Doit avoir la même vue et les mêmes informations que l'étancheur
   3-Doit pouvoir voir si l'étancheur a bien pris en compte la fuite et l'a signalée au client via la plateforme

Les différentes mesures/informations recueillies peuvent avantageusement être visualisées dans un ou plusieurs graphes avec :
- La courbe de mesure d'eau (entre 0 et 100%)
- La pluviométrie locale (précipitations en mm)
- La température locale (peut être substituée à la pluviométrie pour éviter de surcharger le graphe)

La pluviométrie et la température permettent de mettre en contexte la mesure d'eau et confirmer la présence de fuite.

Il est par exemple possible de définir quatre états d'alerte pour chaque zone (Zi), en fonction des mesures de l'unité locale associée (Ui) :
- 1) Risque de fuite :
   - Activé lorsque la valeur de mesure est > 90%
   - Un mail est envoyé à l'étancheur et à l'administrateur (ici Soprema), mais pas à l'habitant
- 2) Fuite :
   - Activé lorsque la valeur de mesure est = 100%
   - Un mail est envoyé à tous les acteurs (3) concernés
- 3) Intervention prévue / en cours :
   - Activable manuellement par l'étancheur pour toutes les zones du chantier, si l'état d'alerte est à «Fuite» : permet de montrer au client qu'il a pris connaissance de la fuite.
   - Un mail est envoyé à l'habitant
   - Se désactive automatiquement après 3 semaines et reprend l'état d'alerte correspondant à la valeur de mesure (fuite, risque de fuite ou état normal)
- 4) Etat normal :
   - Activé lorsque la valeur de mesure est de nouveau < 70%

Le système intègre avantageusement aussi et exploite les prévisions météorologiques. Ces prévisions permettent à l'étancheur :
- De planifier son intervention à un jour sans pluie
- D'évaluer l'urgence de l'intervention : tant que l'étancheur n'a pas réparé la fuite, chaque pluie infiltrera l'étanchéité et prolongera la durée de l'intervention.

La visualisation d'un plan du chantier (de la zone) peut permettre :
- De comprendre l'emplacement de la fuite
- De retrouver le boîtier de communication (pour changer les piles, ou le remplacer en cas de dysfonctionnement)
- De visualiser comment le ruban capteur est placé pour mieux analyser la fuite.

Un carnet de suivi (« Log ») peut être prévu pour chaque chantier ou zone. Il permet à l'étancheur de retrouver toutes les alertes qui ont été déclenchées pour le chantier en question, avec la date et l'heure. L'étancheur peut également y rentrer des commentaires, par exemple la synthèse d'une intervention. Le client final peut visualiser le log mais ne peut pas interagir avec lui.

La figure 11 montre une possible présentation d'un écran de visualisation d'un utilisateur connecté à la plateforme et vérifiant l'état d'une unité locale (Ui).

Les champs/fenêtres suivant(e)s peuvent par exemple s'afficher : indication de la dernière mise à jour au niveau de l'unité concernée (A), état/niveau de charge de la batterie du module correspondant (B), état du système au niveau de l'unité (en C : normal, dysfonctionnement, alerte fuite, etc..), prévisions météo (D), boîte de dialogue (E), carte de localisation du site (F), schéma du site avec localisation de l'emplacement de la fuite (G). La figure 11 illustre une situation dans laquelle le système fonctionne normalement et aucune fuite n'est détectée.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Procédé semi-automatique ou automatique (1) de détection et de signalisation d'une fuite au niveau d'une toiture (2) ou d'au moins une partie de toiture d'au moins un(e) immeuble, bâtiment ou habitation (3), ladite toiture (2) ou partie de toiture concernée comprenant, reposant sur un support (10), de l'intérieur vers l'extérieur, au moins : une couche d'isolant (8) et une couche d'étanchéité (7), ledit procédé consistant à fournir et à mettre en oeuvre un système comprenant :
- i) une unité locale (Ui) de détection et de communication pour chaque zone (Zi) de toiture ou de partie de toiture (2) à surveiller, chaque unité locale comprenant, d'une part, un capteur (4) allongé sous la forme d'un capteur à contact consistant en un ruban (4') intégrant deux lignes conductrices (4"), et, d'autre part, un module (5) de mesure de la résistance (R) entre ces lignes (4") et de transmission d'au moins certains résultats des mesures successivement réalisées, après prétraitement, et
- ii) une plateforme de gestion (6) configurée pour recevoir et traiter les messages des modules (5) des différentes unités (Ui) locales gérées par elle, et pour déclencher sélectivement une ou des actions prédéterminées en fonction de l'évaluation des messages réceptionnés et de l'estimation de la présence ou non d'une fuite,
- chaque module (5) intégrant des moyens logiciels d'évaluation des mesures de résistance et d'estimation du taux de présence d'eau, ces moyens déclenchant l'envoi d'un message d'alerte lorsque ledit taux dépasse une valeur seuil prédéterminée, la configuration de pose de chaque capteur allongé étant adaptée à la forme de la zone surveillée par l'unité locale considérée, et la communication montante entre chaque unité locale et la plateforme s'effectuant par messages à provenance identifiée,
**caractérisé en ce que** U
- chaque module est autonome, notamment en termes d'alimentation en énergie et de fonctionnement,
- chaque capteur (4) est installé sous la couche d'étanchéité (7) de la zone de toiture (Zi) associée et disposé sous la couche d'isolant (8), en reposant sur le support (10) ou sur une couche pare-vapeur (9) posée sur ce dernier, le module (5) correspondant étant logé dans l'épaisseur de ladite couche d'isolant (8) ou dans un boîtier de protection spécifique ou non, tel que par exemple un lanterneau, l'unité - locale (Ui) considérée effectue des mesures répétitives à intervalle régulier, et les messages à provenance identifiée sont transmis inconditionnellement à intervalle maximal, ladite communication montante étant réalisée au moins localement par un mode de transmission sans fil entre, d'une part, le module (5) de l'unité locale (Ui) considérée et, d'autre part, soit une borne relais locale, soit une station de base ou encore un système de communication relié à internet et présent dans l'immeuble, le bâtiment ou l'habitation (3) concerné(e), ou dans une construction voisine.

2. Procédé selon la revendication 1, **caractérisé en ce que** la plateforme (6) intègre des moyens logiciels pour la détermination de la probabilité de la présence d'une fuite suite à la réception d'un message d'alerte de la part d'un module et, le cas échéant, prise en compte d'autres facteurs ou informations, et pour l'envoi conditionnel d'une notification à l'étancheur et/ou au(x) résident(s) et/ou au(x) propriétaire(s) et/ou au gestionnaire immobilier concerné (s), le cas échéant de notifications différentiées selon les destinataires, ladite plateforme (6) étant accessible pour les destinataires autorisés, préférentiellement avec des informations/données consultables différentes en fonction de la qualité du destinataire considéré.

3. Procédé selon la revendication 2, **caractérisé en ce que** la plateforme (6) intègre aussi des moyens logiciels pour l'analyse et l'évaluation de la forme d'une courbe enregistrée de variation du taux de présence d'eau (P) sur une période précédant la réception d'un message d'alerte indiquant le dépassement d'une valeur seuil pour ce taux, et/ou pour l'attribution d'un degré d'urgence aux actions à entreprendre suite à une détection de fuite, ce en fonction notamment de prévisions météorologiques locales.

4. Procédé selon l'une quelconque des revendications 1 à 3, **caractérisé en ce que** la plateforme (6) est reliée à des sources d'informations relatives notamment aux précipitations en passées et en cours au niveau des différentes zones (Zi) surveillées par cette plateforme (6), ainsi qu'aux températures aux mêmes endroits.

5. Procédé selon l'une quelconque des revendications 1 à 4, **caractérisé en ce que** chaque message envoyé par un module (5) comprend au moins : un identifiant unique correspondant à l'unité (Ui) concernée, une donnée indiquant le taux de présence d'eau (P) déterminé à partir de la mesure de la résistance (R), et exprimé par exemple en % de présence, et la date et l'heure de la mesure.

6. Procédé selon l'une quelconque des revendications 1 à 5, **caractérisé en ce que** le ou chaque capteur (4) comprend une première portion (11) installée de manière à s'étendre sensiblement sur tout le pourtour de la zone (Zi) à laquelle il est associé et au moins une seconde portion (11') s'étendant à l'intérieur de cette zone (Zi), préférentiellement selon une configuration permettant une couverture sensiblement homogène de la surface de ladite zone(Zi) en termes de distance moyenne par rapport audit capteur (4).

7. Procédé selon l'une quelconque des revendications 1 à 6, **caractérisé en ce que** le fonctionnement de chaque unité locale (Ui) de détection et de communication et la communication entre la plateforme (6) et les modules (5) de ces unités (Ui) sont pilotés par des routines de pilotage prédéterminées.

8. Procédé selon l'une quelconque des revendications 1 à 7, **caractérisé en ce qu'**il met en oeuvre des routines de pilotage prédéterminées.

## Patentansprüche

1. Halbautomatisches oder automatisches Verfahren (1) zur Erkennung und Meldung eines Lecks an einer Dachabdeckung (2) oder mindestens einem Teil einer Dachabdeckung von mindestens einem Mehrfamilienhaus, einem Gebäude oder einer Wohnstätte (3), wobei die Dachabdeckung (2) oder der betroffene Teil der Dachabdeckung auf einem Träger (10) von innen nach außen aufliegend mindestens Folgendes aufweist: eine Isolierschicht (8) und eine Dichtungsschicht (7), wobei das Verfahren darin besteht, ein System bereitzustellen und zu implementieren, das Folgendes aufweist:
- i) eine lokale Einheit (Ui) zur Erfassung und Kommunikation für jeden zu überwachenden Bereich (Zi) der Dachabdeckung oder eines Teils der Dachabdeckung (2), wobei jede lokale Einheit einerseits einen länglichen Sensor (4) in Form eines Kontaktsensors aufweist, der aus einem Band (4') besteht, das zwei leitende Leitungen (4") enthält, und andererseits ein Modul (5) zur Messung des Widerstands (R) zwischen diesen Leitungen (4") und zur Übertragung nach Vorverarbeitung von mindestens bestimmten Ergebnissen von nacheinander durchgeführten Messungen, und
- ii) eine Verwaltungsplattform (6), die so konfiguriert ist, dass sie die Meldungen der Module (5) der verschiedenen lokalen Einheiten (Ui), die von ihr verwaltet werden, empfängt und verarbeitet und selektiv eine oder mehrere vorbestimmte Aktionen in Abhängigkeit von der Auswertung der empfangenen Meldungen und der Einschätzung, ob ein Leck vorliegt oder nicht, auslöst,
- wobei jedes Modul (5) Softwaremittel zur Auswertung der Widerstandsmessungen und zur Schätzung der Wasserpräsenzrate integriert, wobei diese Mittel das Senden einer Warnmeldung auslösen, wenn die Rate einen vorbestimmten Schwellenwert überschreitet,
wobei die Verlegekonfiguration jedes länglichen Sensors an die Form des von der jeweiligen lokalen Einheit überwachten Bereichs angepasst ist und die aufsteigende Kommunikation zwischen jeder lokalen Einheit und der Plattform durch Meldungen mit identifizierter Herkunft erfolgt, **dadurch gekennzeichnet, dass**
- jedes Modul autonom ist, insbesondere in Bezug auf die Energieversorgung und den Betrieb,
- jeder Sensor (4) unter der Dichtungsschicht (7) des zugehörigen Dachabdeckungsbereichs (Zi) installiert und unter der Isolierschicht (8) angeordnet ist, indem er auf dem Träger (10) oder auf einer auf diesem verlegten Dampfsperrschicht (9) ruht, wobei das entsprechende Modul (5) in der Dicke der Isolierschicht (8) oder in einem spezifischen oder nicht spezifischen Schutzgehäuse, wie beispielsweise einem Oberlicht, untergebracht ist, wobei die jeweilige lokale Einheit (Ui) wiederholte Messungen in regelmäßigen Intervallen durchführt und die Meldungen mit identifizierter Herkunft bedingungslos in einem maximalen Intervall übertragen werden, wobei die aufsteigende Kommunikation zumindest lokal durch einen drahtlosen Übertragungsmodus zwischen einerseits dem Modul (5) der jeweiligen lokalen Einheit (Ui) und andererseits entweder einem lokalen Relaisterminal, einer Basisstation oder auch einem mit dem Internet verbundenen Kommunikationssystem, das in dem betreffenden Mehrfamilienhaus, dem betreffenden Gebäude, der betreffenden Wohnstätte (3) oder in einem benachbarten Bauwerk vorhanden ist, realisiert wird.

2. Verfahren nach Anspruch 1, **dadurch gekennzeichnet, dass** die Plattform (6) Softwaremittel zur Bestimmung der Wahrscheinlichkeit des Vorhandenseins eines Lecks nach dem Empfang einer Warnmeldung von einem Modul und ggf. unter Berücksichtigung weiterer Faktoren oder Informationen integriert sowie zum bedingten Senden einer Benachrichtigung an den Abdichter und/oder den/die Bewohner und/oder den/die Eigentümer und/oder den/die betroffene(n) Immobilienverwalter, ggf. von je nach Empfänger differenzierten Benachrichtigungen, wobei die Plattform (6) für autorisierte Empfänger zugänglich ist, vorzugsweise mit unterschiedlichen abrufbaren Informationen/Daten je nach Eigenschaft des jeweiligen Empfängers.

3. Verfahren nach Anspruch 2, **dadurch gekennzeichnet, dass** die Plattform (6) auch Softwaremittel zur Analyse und Auswertung der Form einer aufgezeichneten Kurve der Veränderung der Wasserpräsenzrate (P) über einen Zeitraum vor dem Empfang einer Warnmeldung integriert, die die Überschreitung eines Schwellenwerts für diese Rate anzeigt, und/oder zur Zuweisung eines Dringlichkeitsgrads für die nach einer Leckageerkennung zu ergreifenden Maßnahmen, dies insbesondere in Abhängigkeit von lokalen Wettervorhersagen.

4. Verfahren nach einem der Ansprüche 1 bis 3, **dadurch gekennzeichnet, dass** die Plattform (6) mit Informationsquellen verbunden ist, die sich insbesondere auf vergangene und laufende Niederschläge in den verschiedenen Bereichen (Zi), die von dieser Plattform (6) überwacht werden, sowie auf die Temperaturen an denselben Orten beziehen.

5. Verfahren nach einem der Ansprüche 1 bis 4, **dadurch gekennzeichnet, dass** jede von einem Modul (5) gesendete Meldung mindestens Folgendes aufweist: einen eindeutigen Identifikator, der der betroffenen Einheit (Ui) entspricht, ein Datenelement, das die Wasserpräsenzrate (P) angibt, die aus der Messung des Widerstands (R) bestimmt und beispielsweise in % der Präsenz ausgedrückt wird, und das Datum und die Uhrzeit der Messung.

6. Verfahren nach einem der Ansprüche 1 bis 5, **dadurch gekennzeichnet, dass** der oder jeder Sensor (4) einen ersten Abschnitt (11) aufweist, der so installiert ist, dass er sich im Wesentlichen über den gesamten Umfang des Bereichs (Zi), dem er zugeordnet ist, erstreckt, und mindestens einen zweiten Abschnitt (11`), der sich innerhalb dieses Bereichs (Zi) erstreckt, vorzugsweise gemäß einer Konfiguration, die eine im Wesentlichen homogene Abdeckung der Oberfläche des Bereichs (Zi) in Bezug auf den mittleren Abstand zu dem Sensor (4) ermöglicht.

7. Verfahren nach einem der Ansprüche 1 bis 6, **dadurch gekennzeichnet, dass** der Betrieb jeder Einheit (Ui) zur Erfassung und Kommunikation und die Kommunikation zwischen der Plattform (6) und den Modulen (5) dieser Einheiten (Ui) durch vorbestimmte Steuerungsroutinen gesteuert werden.

8. Verfahren nach einem der Ansprüche 1 bis 7, **dadurch gekennzeichnet, dass** es vorbestimmte Steuerungsroutinen implementiert.

## Claims

1. Semi-automatic or automatic method (1) for detecting and flagging a leak in a roof (2) or at least a part of roof of at least one office or apartment block, building or residence (3), said roof (2) or part of roof concerned comprising, resting on a support (10), from the inside to the outside, at least: one insulating layer (8) and one waterproofing layer (7), said method consisting in providing and implementing a system comprising:
- i) a local detection and communication unit (Ui) for each roof zone (Zi) or part of roof (2) to be monitored, each local unit comprising, on the one hand, an elongate sensor (4) in the form of a contact sensor consisting of a ribbon (4') incorporating two conductive lines (4"), and, on the other hand, a module (5) for measuring the resistance (R) between these lines (4") and for transmitting at least certain results of the measurements successively performed, after preprocessing, and
- ii) a management platform (6) configured to receive and process the messages from the modules (5) of the different local units (Ui) managed by it, and to selectively trigger one or more predetermined actions based on the evaluation of the messages received and on the estimation of the presence or not of a leak,
- each module (5) incorporating software means for evaluating resistance measurements and estimating the rate of presence of water, these means triggering the sending of an alert message when said rate exceeds a predetermined threshold value, the lay configuration of each elongate sensor being adapted to the form of the zone monitored by the local unit considered, and the uplink communication between each local unit and the platform being performed by messages of identified origin,
**characterized in that**
- each module is autonomous, notably in terms of energy supply and of operation,
- each sensor (4) is installed under the waterproofing layer (7) of the associated roof zone (Zi) and disposed under the insulating layer (8), by resting on the support (10) or on a vapour barrier layer (9) placed thereon, the corresponding module (5) being housed in the thickness of said insulating layer (8) or in a protection housing, specific or not, such as, for example, a skylight,
- the local unit (Ui) considered performs repetitive measurements at regular intervals, and the messages of identified origin are transmitted unconditionally at maximum intervals, said uplink communication being achieved at least locally by a wireless transmission mode between, on the one hand, the module (5) of the local unit (Ui) considered and, on the other hand, either a local relay terminal, or a base station or even a communication system linked to the Internet and present in the office or apartment block, the building or the residence (3) concerned, or in a neighbouring construction.

2. Method according to Claim 1, **characterized in that** the platform (6) incorporates software means for determining the probability of the presence of a leak following the reception of an alert message from a module and, if necessary, taking account of other factors or information, and for conditionally sending a notification to the roofer and/or to the resident (s) and/or to the owner(s) and/or to the property manager concerned, if necessary different notifications depending on the recipients, said platform (6) being accessible for the authorized recipients, preferentially with consultable information/data that differ according to the quality of the recipient considered.

3. Method according to Claim 2, **characterized in that** the platform (6) also incorporates software means for analysing and evaluating the form of a recorded curve of variation of the rate of presence of water (P) over a period preceding the reception of an alert message indicating that a threshold value for this rate has been exceeded, and/or for assigning a degree of urgency to the actions to be undertaken following a leak detection, and doing so notably according to local weather forecasts.

4. Method according to any one of Claims 1 to 3, **characterized in that** the platform (6) is linked to sources of information relating notably to past and current precipitations in the different zones (Zi) monitored by this platform (6), and to the temperatures at the same points.

5. Method according to any one of Claims 1 to 4, **characterized in that** each message sent by a module (5) comprises at least: a unique identifier corresponding to the unit (Ui) concerned, a datum indicating the rate of presence of water (P) determined on the basis of the measurement of the resistance (R), and expressed for example as a percentage presence, and the date and time of the measurement.

6. Method according to any one of Claims 1 to 5, **characterized in that** the or each sensor (4) comprises a first portion (11) installed so as to extend substantially over the entire perimeter of the zone (Zi) with which it is associated and at least one second portion (11') extending inside this zone (Zi), preferentially according to a configuration allowing a substantially uniform coverage of the surface of said zone (Zi) in terms of average distance from said sensor (4) .

7. Method according to any one of Claims 1 to 6, **characterized in that** the operation of each local detection and communication unit (Ui) and the communication between the platform (6) and the modules (5) of these units (Ui) are controlled by predetermined control routines.

8. Method according to any one of Claims 1 to 7, **characterized in that** it implements predetermined control routines.
